# FASCICULE DE BREVET EUROPEEN

(11) **EP 2 292 534 B1**
(45) Date de publication et mention de la délivrance du brevet: **12.04.2017**
(21) Numéro de dépôt: 10175674.0
(22) Date de dépôt: 07.09.2010
(51) Int. Cl.: B65F 1/10, B65F 7/00

(54) **Conteneur de collecte de déchets anti-odeurs**
Geruchsverhindernder Abfallsammelbehälter
Refuse collection container with anti-odour treatment

(30) Priorité: 08.09.2009 FR 0956098
(43) Date de publication de la demande: 09.03.2011
(73) Titulaire: Compagnie Plastic Omnium, 69007 Lyon (FR)
(72) Inventeur: Troton, Jean, 01150 Chazey sur Ain (FR); Fillon, Jérôme, 43000 Le Puy en Velay (FR); Lambert, Juliette, 01150 Vaux en Bugey (FR)
(74) Mandataire: Remy, Vincent Noel Paul

(56) Documents cités:
- DE-U1-202004 017 544
- US-A- 4 207 973
- US-A- 5 147 055
- US-A- 5 158 199

## Description

La présente invention concerne un conteneur de collecte de déchets selon le préambule de la revendication 1, plus particulièrement une colonne d'apport volontaire de déchets, destinée à être mise en place sur la voie publique.

Une telle colonne d'apport volontaire comprend généralement une paroi supérieure, une paroi inférieure et une ou plusieurs parois latérales et est placée sur la voie publique. Ces parois délimitent alors un logement formant un espace de stockage pour les déchets.

La paroi latérale d'une telle colonne est munie d'au moins une ouverture pour l'introduction des déchets dans l'espace de stockage.

Les déchets une fois introduits dans la colonne peuvent rester quelques temps sur la voie publique, le ramassage des déchets, et, de ce fait, le vidage de la colonne, n'intervenant que périodiquement, par exemple une fois tous les quinze jours.

Or, les déchets introduits dans la colonne peuvent se décomposer durant cette période, notamment en été, lorsque la température extérieure est élevée, et diffuser alors des odeurs nauséabondes qui incommodent les passants et les résidents habitant au voisinage de la colonne.

Cela est notamment le cas pour les colonnes stockant des déchets de type verre comprenant des bouteilles dans lesquelles il reste souvent un fond de liquide ou dans le cas des colonnes stockant les déchets ménagers destinés à créer du compost.

On connaît du document US5158199A un conteneur de déchets pour remédier à cet inconvénient, conforme au préambule de la revendication 1, et comprenant un matériau absorbant les odeurs agencée dans le conteneur.

L'invention a également pour but de remédier à cet inconvénient en proposant un conteneur de collecte de déchets permettant de limiter les odeurs s'échappant de celui-ci, et permettant de minimiser le bruit dû à la chute des déchets dans le conteneur.

A cet effet, l'invention a pour objet un conteneur de collecte de déchets, conforme à la revendication 1.Le conteneur comprend notamment une rampe inclinée relativement à l'horizontale ménagée dans le conteneur de sorte que l'ouverture débouche sur une extrémité supérieure de la rampe. La rampe permet de diminuer le bruit provoqué par le déchet lorsque celui-ci tombe dans l'espace de stockage en diminuant la hauteur de la chute, l'ouverture d'introduction étant généralement ménagée en partie haute du conteneur. L'homme du métier saura adapter la pente de la rampe et ses propriétés (matériau, rugosité, etc) pour que le passage du déchet sur celle-ci minimise le bruit dû à sa chute. Une telle rampe est particulièrement adaptée pour les conteneurs de collecte du verre du fait de la forme particulière des bouteilles qui permettent leur roulage sur la rampe.

Le matériau absorbant permet d'absorber les molécules responsables des mauvaises odeurs. En outre, il est situé au plus près de l'ouverture, sur le trajet suivi par le déchet introduit dans le conteneur et donc également sur le trajet suivi par l'air pour s'échapper de celui-ci. Il permet donc de limiter les mauvaises odeurs s'échappant du conteneur.

Un tel conteneur permet donc de lutter efficacement contre les mauvaises odeurs pouvant s'échapper du conteneur.

De plus, un tel conteneur reste économique puisque la nature du matériau absorbant lui permet d'être placé de façon très localisée dans le conteneur tout en étant efficace et puisque son activation ne nécessite pas l'utilisation de systèmes mécaniques relativement complexes. Le maintien de l'efficacité de la fonction anti-odeurs dans le temps est donc assez facile, des opérations de maintenance complexes n'étant pas requises.

Dans un mode de réalisation particulier de l'invention, le matériau absorbant contient du charbon actif. Un tel matériau est particulièrement efficace pour absorber les molécules gazeuses produisant les odeurs, notamment puisqu'il comprend des pores ayant une surface interne considérable.

Dans un mode de réalisation préférentiel, la couche de matériau absorbant comprend également un photocatalyseur situé au moins sur une face de la couche tournée vers l'ouverture. Ce photocatalyseur est par exemple constitué par du dioxyde de titane. De cette façon, les molécules responsables des mauvaises odeurs stockées dans le matériau absorbant sont dégradées par le photocatalyseur sous l'action des U.V. reçues depuis l'ouverture, celle-ci formant un passage depuis l'extérieur pour la lumière.

Cela permet d'augmenter considérablement la durée d'action de la couche de matériau absorbant, puisque celle-ci se régénère sans action externe. De ce fait, il est encore possible de diminuer les opérations de maintenance nécessaires au bon fonctionnement de la fonction anti-odeurs dans le conteneur. En effet, grâce à un tel photocatalyseur, il n'est pas nécessaire de remplacer la couche de matériau absorbant avant plusieurs années.

On notera que la couche de matériau absorbant peut être notamment constituée par un matériau de la marque PURIFIK®, commercialisé par la société QUARTIK.

Le conteneur peut également comprendre l'une ou plusieurs des caractéristiques de la liste suivante :
- au moins une couche comprend une pluralité de plaques de matériau absorbant situées dans un même plan. De cette façon, on permet, tout en couvrant une surface maximale de l'ouverture (pour augmenter la performance d'absorption), d'augmenter la souplesse de la couche de matériau absorbant pour faciliter le passage du déchet à travers la couche. En effet, celle-ci n'étant pas d'un seul tenant, l'inertie du déchet la déforme plus facilement et celui-ci passe plus aisément à travers la couche lors de son introduction dans le conteneur,
- au moins une plaque de matériau absorbant est liée au conteneur de façon à conserver au moins un degré de liberté relativement au conteneur. La couche de matériau peut alors s'effacer lors du passage des déchets puis revenir en position initiale, fermant ainsi le volume de déchets. Cela permet ainsi de faciliter le passage des déchets lors de leur introduction dans le conteneur tout en confinant le volume des déchets lorsque le déchet est passé, ce qui permet d'atténuer le bruit perçu à l'extérieur,
- la couche de matériau absorbant est reliée à une paroi externe du conteneur de façon à être apte à recouvrir l'ouverture. De cette façon, la couche étant située au plus près de l'ouverture, on optimise la proportion d'air s'échappant du conteneur en traversant la couche et, le cas échéant, la quantité de lumière captée par le matériau, ce qui permet de faciliter la photocatalyse,
- le conteneur comprend un canal de glissement et/ou roulement définissant un espace de glissement et/ou roulement dans lequel sont confinés les déchets lors de leur passage sur la rampe, le canal comprenant au moins deux parois latérales et une paroi inférieure formant la rampe. On empêche ainsi les déchets de tomber dans l'espace de stockage à un endroit de la rampe qui ne serait pas prévu pour cela, notamment ailleurs qu'au niveau de son extrémité inférieure,
- la couche de matériau absorbant est placée à distance de l'ouverture, dans l'espace de glissement et/ou roulement, dans un plan essentiellement vertical. Dans ce cas, la couche freine le déchet lors de son passage sur la rampe, le passage de celui-ci à travers la couche nécessitant de déformer le matériau absorbant et consommant de ce fait une partie de l'énergie du déchet en mouvement. On notera que l'atténuation des odeurs dans ce mode de réalisation est plus efficace lorsque la rampe délimite un espace de glissement et/ou roulement fermé, car l'air s'échappant du conteneur est alors forcé de passer à travers la couche de matériau absorbant,
- le conteneur comprend une pluralité de couches de matériau absorbant situées en regard de l'ouverture, dans des plans distincts, notamment dans l'espace de glissement et/ou roulement dans un plan essentiellement vertical, ce qui permet de freiner encore plus le déchet introduit dans le conteneur,
- le conteneur est une colonne d'apport volontaire, notamment pour la collecte du verre ou des déchets ménagers, adaptés pour le compost. Elle est destinée à être mise en place sur la voie publique et présente de préférence un espace de stockage de volume supérieur à 1000 L;
- le conteneur comprend une coque rigide délimitant l'espace de stockage, comprenant au moins une paroi supérieure et une paroi latérale, l'ouverture pour l'introduction des déchets étant ménagée dans une paroi latérale de la coque,
- le conteneur comprend en outre une armature, de préférence métallique, formant paroi de fond du conteneur.

L'invention sera mieux comprise à la lecture de la description qui va suivre, donnée uniquement à titre d'exemple et faite en se référant aux dessins dans lesquels :
- la figure 1 est une vue en coupe d'un conteneur de collecte de déchets selon un mode de réalisation de l'invention,
- la figure 2 représente un détail vu en coupe selon A-A du conteneur de la figure 1.

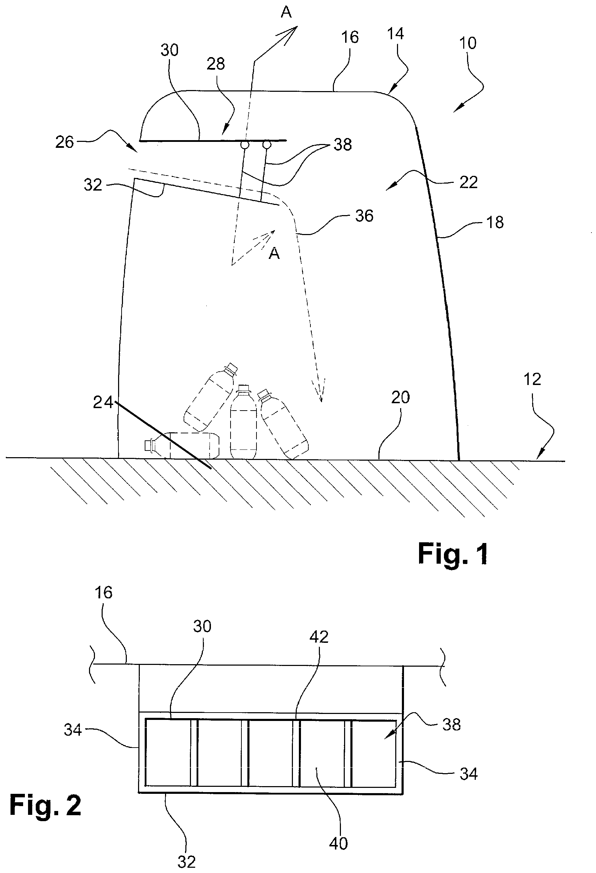

On a représenté sur la figure 1 une vue d'ensemble d'un conteneur de collecte de déchets 10. Ce conteneur constitue plus particulièrement une colonne d'apport volontaire destinée à être mise en place sur la voie publique 12, par exemple pour recevoir les déchets à base de verre.

Le conteneur comprend une coque creuse 14 réalisée en matière plastique et comprenant une paroi supérieure 16 et une paroi latérale 18 de section circulaire , la coque délimitant un logement 22 formant un espace de stockage pour les déchets 24, représentés une fois ceux-ci ayant été introduits dans le conteneur. Le conteneur comprend également une paroi de fond 20, formant le fond du logement 22 et comprenant généralement deux trappes déplaçables entre une position d'ouverture et une position de fermeture. La paroi de fond fait généralement partie d'une armature, notamment métallique, sur laquelle est montée la coque.

Le conteneur comprend également une ouverture 26 pour l'introduction des déchets dans le conteneur, située en partie haute de la paroi latérale 18. Dans l'exemple, une pluralité d'ouvertures d'introduction sont placées côté à côte, celles-ci étant ménagées dans une ouverture rectangulaire de dimensions supérieures et séparées par des ponts de matière.

Comme on le voit sur la figure 1, le conteneur 10 comprend également un canal 28 de glissement et/ou roulement, comprenant une paroi supérieure 30 essentiellement horizontale, une paroi inférieure 32 et des parois latérales 34 essentiellement verticales, visibles sur la figure 2. La paroi inférieure 32 est légèrement inclinée relativement à l'horizontale. Ce canal 28 est ouvert à deux de ses extrémités opposées, respectivement les extrémité comprenant les extrémités supérieure et inférieure de la paroi inférieure 32.

Le canal 28 est fixé à la paroi supérieure du conteneur et est mis en place dans celui-ci de sorte que l'ouverture d'introduction 26 débouche sur l'extrémité du canal 28 comprenant l'extrémité supérieure de la paroi inférieure 32 de celui-ci. L'extrémité du canal 28 comprenant l'extrémité inférieure de la paroi inférieure 32 de celui-ci étant placé à la verticale de l'espace de stockage.

La paroi inférieure 32 du conteneur forme ainsi une rampe de glissement et/ou roulement pour les déchets introduits dans le conteneur par l'ouverture 26, avant que ceux-ci ne tombent dans l'espace de stockage, lorsqu'ils arrivent à l'extrémité inférieure de la rampe. Le canal 28 forme ainsi un espace de glissement et/ou de roulement dans lequel sont confinés les déchets jusqu'à l'extrémité inférieure de la rampe 32

On notera qu'à l'extrémité supérieure de la rampe, le canal 28 est dimensionné de façon à être juste de même dimension que l'ouverture rectangulaire délimitant les différentes ouvertures d'introduction des déchets.

Le conteneur est ainsi conformé de sorte que le trajet des déchets dans le conteneur, représenté par la flèche 36, comprend le passage du déchet sur la rampe 32 puis, une fois le déchet arrivé au bout de la rampe, sa chute libre jusqu'au fond du conteneur.

Le conteneur comprend également, agencé dans l'espace de glissement et/ou roulement défini par le canal 28, deux couches 38 de matériau absorbant, situées à distance de l'ouverture, essentiellement parallèles entre elles et verticales. Ces couches 38 sont constituées, comme on le voit sur la figure 2, par une pluralité de plaques de matière 40 formant volets. Elles sont situées au voisinage de l'extrémité inférieure de la rampe.

Ces couches 38 contiennent un charbon actif et, sur une face tournée vers l'ouverture d'introduction 26, du dioxyde de titane, ce matériau formant un photocatalyseur. Chacune des plaques est plus particulièrement fabriquée à l'aide du matériau de la marque PURIFIK®, commercialisé par la société QUARTIK.

Un couche réalisée à l'aide de tels matériaux permet d'absorber les molécules responsables des odeurs qui s'échappent du conteneur, grâce au charbon actif, et de détruire ensuite ces molécules, du fait de l'action du dioxyde de titane soumis à la lumière.

Chaque volet 40 des couches 38 comprend une extrémité supérieure liée au conteneur par l'intermédiaire d'une barre de fixation 42 située en partie haute du canal et une extrémité inférieure libre. La barre 42 est agencée parallèlement à l'extrémité de ce canal de sorte que chaque couche s'étende essentiellement dans un même plan que l'ouverture d'introduction des déchets. Chaque volet est conformé de façon à être souple et se déforme ainsi de façon réversible relativement facilement lors du passage du déchet, son extrémité inférieure étant relevée à cette occasion du fait de l'inertie du déchet.

On notera que les couches 38 sont de dimensions essentiellement identiques à celles du canal 28 et sont donc de dimensions supérieures à celles de l'ouverture.

On va maintenant décrire le fonctionnement du conteneur selon l'invention.

Dans un premier temps, lorsqu'on introduit le déchet dans le conteneur, il glisse ou roule sur la rampe 32. Il rencontre ensuite les couches 38 de matériau absorbant situées sur le trajet du déchet, et traverse chacune de celle-ci. Il est alors ralenti car l'énergie utilisée par le déchet pour déformer les couches engendre une décélération de celui-ci.

Lorsque le déchet a traversé la couche de matériau absorbant, la couche reprend sa position initiale. Chaque couche forme en fait un rideau de matière permettant de ralentir le déchet. On notera que les couches sont placées au voisinage de l'extrémité inférieure de la rampe car elles permettent alors d'effectuer un ralentissement plus efficace du déchet.

Lorsque le déchet atteint l'extrémité inférieure de la rampe 32, il tombe au fond du conteneur, dans l'espace de stockage, par gravité. Le bruit de la chute du verre est diminué du fait que la hauteur de la chute du verre dans le conteneur a diminué et que sa vitesse peut également être diminuée grâce à l'action conjuguée de la rampe et de l'interaction avec les couches 38. En outre, les ondes sonores engendrées par la chute du déchet doivent passer au travers des couches 38 pour sortir du conteneur, ce qui permet d'atténuer celles-ci et d'insonoriser ainsi en partie l'intérieur du conteneur.

Les couches 38 de matériau absorbant sont également positionnées sur le trajet parcouru par l'air pour s'échapper du conteneur. L'air traverse donc les couches 38, et les molécules provoquant les odeurs nauséabondes provenant des déchets en décomposition sont absorbées au moins partiellement du fait de ces couches.

Le dioxyde de titane présent dans ces couches permet de régénérer le matériau absorbant en détruisant, sous l'effet de la lumière reçue depuis l'ouverture d'introduction, les molécules stockées dans le matériau absorbant, plus particulièrement le charbon actif.

Le conteneur selon le mode de réalisation décrit ci-dessus, permet donc d'atténuer à la fois le bruit et les odeurs s'échappant du conteneur.

On notera que l'invention n'est pas limitée au mode de réalisation décrit dans l'exemple précédent.

En effet, la forme du conteneur peut varier. Celui-ci peut être de forme parallélépipédique et/ou peut comprendre une pluralité d'ouvertures réparties sur tout son pourtour. Il peut également être réalisé en un matériau métallique, même si cela est moins avantageux car cela peut augmenter le bruit de la chute des déchets dans le conteneur.

Les ouvertures d'introduction peuvent être ménagées ailleurs que sur la paroi latérale du conteneur, par exemple sur la paroi supérieure de celui-ci. En outre, la forme de ces ouvertures n'est pas limitée à ce qui a été décrit ci-dessus. Les ouvertures peuvent ne pas être ménagées côte à côte ou chaque ouverture peut être ménagée dans une plaque transparente aux U.V. placée dans la paroi latérale du conteneur.

On notera également que le canal est optionnel. Dans le cas où le conteneur est dépourvu de canal, il peut comprendre une couche de matériau absorbant reliée à la coque du conteneur, par exemple à la paroi latérale de celui-ci, de façon à former une trappe placée juste derrière l'ouverture ou un opercule placé dans l'ouverture et formé par plusieurs plaques de matériau absorbant.

Si le canal est ménagé dans le conteneur, il peut ne pas être de la forme décrite ci-dessus. Il peut notamment ne pas comprendre de parois latérales et/ou de paroi supérieure. Sa paroi supérieure peut également être formée par la paroi supérieure du conteneur.

La couche de matériau peut également ne pas être de dimensions supérieures ou égales à celle de l'ouverture même si de grandes dimensions de la couche permet d'améliorer l'élimination des odeurs. Le conteneur peut comprendre une seule couche associée à chaque ouverture ou à une pluralité d'ouverture côte à côté. Chaque couche peut également être d'un seul tenant. Elle peut aussi ne pas être placée dans un plan parallèle à celui de l'ouverture.

Le matériau constituant ces couches n'est pas non plus limité au matériau décrit dans l'exemple. Le photocatalyseur est notamment optionnel. Le matériau peut en outre comprendre des additifs non mentionnés ci-dessus.

Le conteneur peut également être destiné à recevoir d'autres déchets que ceux à base de verre, par exemple des déchets ménagers, et être au moins partiellement enterré.

## Revendications

1. Conteneur (10) de collecte de déchets (24), comprenant un espace de stockage (22) des déchets (24), au moins une ouverture (26) pour l'introduction des déchets (24) dans le conteneur (10) de collecte de déchets (24) et au moins une couche (38) d'un matériau absorbant les odeurs, agencée dans le conteneur (10) de collecte de déchets (24) pour se trouver sur le trajet d'un déchet (24) introduit dans le conteneur (10) de collecte de déchets (24), entre l'ouverture (26) et l'espace de stockage (22), **caractérisé en ce que** le conteneur (10) de collecte de déchets (24) comprend une rampe (32) inclinée relativement à l'horizontale, ménagée dans le conteneur (10) de collecte de déchets (24) de sorte que l'ouverture (26) débouche sur une extrémité supérieure de la rampe (32).

2. Conteneur (10) de collecte de déchets (24) selon la revendication précédente dans lequel le matériau absorbant les odeurs contient du charbon actif.

3. Conteneur (10) de collecte de déchets (24) selon l'une quelconque des revendications précédentes, dans lequel la au moins une couche (38) de matériau absorbant les odeurs comprend un photocatalyseur, tel que du dioxyde de titane, situé au moins sur une face de la au moins une couche (38) de matériau absorbant les odeurs tournée vers l'ouverture (26).

4. Conteneur (10) de collecte de déchets (24) selon l'une quelconque des revendications précédentes, dans lequel la au moins une couche (38) de matériau absorbant les odeurs comprend une pluralité de plaques (40) de matériau absorbant les odeurs situées dans un même plan.

5. Conteneur (10) de collecte de déchets (24) selon la revendication précédente, dans lequel au moins une plaque (40) de matériau absorbant les odeurs est liée au conteneur (10) de collecte de déchets (24) de façon à conserver au moins un degré de liberté relativement au conteneur (10) de collecte de déchets (24).

6. Conteneur (10) de collecte de déchets (24) selon l'une quelconque des revendications précédentes, dans lequel la au moins une couche (38) de matériau absorbant les odeurs est reliée à une paroi externe (30) du conteneur (10) de collecte de déchets (24) de façon à être apte à recouvrir l'ouverture (26).

7. Conteneur (10) de collecte de déchets (24) selon l'une des revendications précédentes, comprenant un canal (28) de glissement et/ou de roulement définissant un espace de glissement et/ou roulement dans lequel sont confinés les déchets (24) lors de leur passage sur la rampe (32), le canal (28) de glissement et/ou de roulement comprenant au moins deux parois latérales (34) et une paroi inférieure formant la rampe (32).

8. Conteneur (10) de collecte de déchets (24) selon la revendication précédente, dans lequel la au moins une couche (38) de matériau absorbant les odeurs est placée à distance de l'ouverture (26), dans l'espace de glissement et/ou roulement, dans un plan essentiellement vertical.

9. Conteneur (10) de collecte de déchets (24) selon la revendication 7 ou 8, comprenant une pluralité de couches (38) de matériau absorbant les odeurs situées en regard de l'ouverture (26), dans des plans distincts.

10. Conteneur (10) de collecte de déchets (24) selon l'une quelconque des revendications précédentes, formant une colonne d'apport volontaire de déchets mise en place sur la voie publique (12).

11. Conteneur (10) de collecte de déchets (24) selon l'une quelconque des revendications précédentes, dans lequel l'espace de stockage (22) présente un volume supérieur à 1000L.

12. Conteneur (10) de collecte de déchets (24) selon l'une quelconque des revendications précédentes, comprenant une coque rigide (14) délimitant l'espace de stockage (22), comprenant au moins une paroi supérieure (16) et une paroi latérale (18), l'ouverture (26) pour l'introduction des déchets (24) étant ménagée dans la au moins une paroi latérale (18) de la coque rigide (14).

13. Conteneur (10) de collecte de déchets (24) selon la revendication précédente, comprenant en outre une armature, de préférence métallique, formant paroi de fond (20) du conteneur (10).

## Patentansprüche

1. Behälter (10) zum Sammeln von Abfällen (24), umfassend einen Raum zum Lagern (22) der Abfälle (24), mindestens eine Öffnung (26) zum Einbringen der Abfälle (24) in den Behälter (10) zum Sammeln von Abfällen (24) und mindestens eine Schicht (38) aus einem geruchsabsorbierenden Material, die in dem Behälter (10) zum Sammeln von Abfällen (24) vorgesehen ist und die sich auf der Strecke eines in den Behälter (10) zum Sammeln von Abfällen (24) eingebrachten Abfalls (24) befindet, zwischen der Öffnung (26) und dem Lagerraum (22), **dadurch gekennzeichnet, dass** der Behälter (10) zum Sammeln von Abfällen (24) eine Rampe (32) umfasst, die relativ zu der Horizontalen geneigt ist und in dem Behälter (10) zum Sammeln von Abfällen (24) ausgebildet ist, so dass die Öffnung (26) an einem oberen Ende der Rampe (32) ausmündet.

2. Behälter (10) zum Sammeln von Abfällen (24) nach dem vorhergehenden Anspruch, wobei das geruchsabsorbierende Material Aktivkohle enthält.

3. Behälter (10) zum Sammeln von Abfällen (24) nach einem der vorhergehenden Ansprüche, wobei die mindestens eine Schicht (38) aus geruchsabsorbierendem Material einen Fotokatalysator, wie Titandioxid, enthält, der sich auf mindestens einer Fläche der mindestens einen Schicht (38) aus geruchsabsorbierendem Material befindet, die zu der Öffnung (26) hin gewandt ist.

4. Behälter (10) zum Sammeln von Abfällen (24) nach einem der vorhergehenden Ansprüche, wobei die mindestens eine Schicht (38) aus geruchsabsorbierendem Material eine Vielzahl von Platten (40) aus geruchsabsorbierendem Material umfasst, die sich auf einer gleichen Ebene befinden.

5. Behälter (10) zum Sammeln von Abfällen (24) nach dem vorhergehenden Anspruch, wobei mindestens eine Platte (40) aus geruchsabsorbierendem Material mit dem Behälter (10) zum Sammeln von Abfällen (24) in der Form verbunden ist, dass mindestens ein Freiheitsgrad relativ zu dem Behälter (10) zum Sammeln von Abfällen (24) gewahrt wird.

6. Behälter (10) zum Sammeln von Abfällen (24) nach einem der vorhergehenden Ansprüche, wobei die mindestens eine Schicht (38) aus geruchsabsorbierendem Material mit einer Außenwand (30) des Behälters (10) zum Sammeln von Abfällen (24) in der Form verbunden ist, dass sie die Öffnung (26) bedecken kann.

7. Behälter (10) zum Sammeln von Abfällen (24) nach einem der vorhergehenden Ansprüche, umfassend einen Gleit- und/oder Rollkanal (28), der einen Gleit- und/oder Rollraum definiert, in dem die Abfälle (24) beim Passieren der Rampe (32) eingeschlossen sind, wobei der Gleit- und/oder Rollkanal (28) mindestens zwei Seitenwände (34) und eine Innenwand zum Bilden der Rampe (32) umfasst.

8. Behälter (10) zum Sammeln von Abfällen (24) nach dem vorhergehenden Anspruch, wobei die mindestens eine Schicht (38) aus geruchsabsorbierendem Material von der Öffnung (26) beabstandet angeordnet ist, in dem Gleit- und/oder Rollraum, auf einer im Wesentlichen vertikalen Ebene.

9. Behälter (10) zum Sammeln von Abfällen (24) nach Anspruch 7 oder 8, umfassend eine Vielzahl von Schichten (38) aus geruchsabsorbierendem Material, die sich der Öffnung (26) gegenüber befinden, auf unterschiedlichen Ebenen.

10. Behälter (10) zum Sammeln von Abfällen (24) nach einem der vorhergehenden Ansprüche, der eine Station zum freiwilligen Sammeln von Abfällen bildet, die auf öffentlichen Straßen bzw. Wegen (12) aufgestellt ist.

11. Behälter (10) zum Sammeln von Abfällen (24) nach einem der vorhergehenden Ansprüche, wobei der Lagerraum (22) ein Fassungsvermögen größer als 1.000 1 aufweist.

12. Behälter (10) zum Sammeln von Abfällen (24) nach einem der vorhergehenden Ansprüche, umfassend eine starre Schale (14), die den Lagerraum (22) begrenzt und mindestens eine obere Wand (16) und eine Seitenwand (18) umfasst, wobei die Öffnung (26) zum Einbringen von Abfällen (24) in der mindestens einen Seitenwand (18) der starren Schale (14) ausgebildet ist.

13. Behälter (10) zum Sammeln von Abfällen (24) nach dem vorhergehenden Anspruch, ferner umfassend eine Armierung, vorzugsweise aus Metall, welche die Bodenwand (20) des Behälters (10) bildet.

## Claims

1. Container (10) for collecting refuse (24), comprising a space (22) for storing refuse (24), at least one opening (26) for introducing refuse (24) in the container (10) for collecting refuse (24) and at least one layer (38) of an odour absorbing material, arranged in the container (10) for collecting refuse (24) so as to be on the path of refuse (24) introduced in the container (10) for collecting refuse (24), between the opening (26) and the storage space (22), **characterised in that** the container (10) for collecting refuse (24) comprises a ramp (32) inclined relative to the horizontal, provided in the container (10) for collecting refuse (24) such that the opening (26) opens on an upper end of the ramp (32).

2. Container (10) for collecting refuse (24) according to the preceding claim, wherein the odour absorbing material contains activated carbon.

3. Container (10) for collecting refuse (24) according to any one of the preceding claims, wherein the at least one layer (38) of odour absorbing material comprises a photocatalyst, such as titanium dioxide, located at least on one side of the at least one layer (38) of odour absorbing material facing the opening (26).

4. Container (10) for collecting refuse (24) according to any one of the preceding claims, wherein the at least one layer (38) of odour absorbing material comprises a plurality of plates (40) of odour absorbing material located in the same plane.

5. Container (10) for collecting refuse (24) according to the preceding claim, wherein the at least one plate (40) of odour absorbing material is connected to the container (10) for collecting refuse (24) so as to keep at least one degree of freedom relative to the container (10) for collecting refuse (24).

6. Container (10) for collecting refuse (24) according to any one of the preceding claims, wherein the at least one layer (38) of odour absorbing material is connected to an outer wall (30) of the container (10) for collecting refuse (24) so as to be able to cover the opening (26).

7. Container (10) for collecting refuse (24) according to one of the preceding claims, comprising a sliding and/or rolling channel (28) defining a sliding and/or rolling space in which refuse (24) is confined when passing on the ramp (32), the sliding and/or rolling channel (28) comprising at least two side walls (34) and a lower wall forming the ramp (32).

8. Container (10) for collecting refuse (24) according to the preceding claim, wherein the at least one layer (38) of odour absorbing material is located away from the opening (26), in the sliding and/or rolling space, in a substantially vertical plane.

9. Container (10) for collecting refuse (24) according to claim 7 or 8, comprising a plurality of layers (38) of odour absorbing material located opposite the opening (26), in separate planes.

10. Container (10) for collecting refuse (24) according to any one of the preceding claims, forming a voluntary refuse disposal column installed on the public highway (12).

11. Container (10) for collecting refuse (24) according to any one of the preceding claims, wherein the volume of the storage space (22) is greater than 1000 L.

12. Container (10) for collecting refuse (24) according to any one of the preceding claims, comprising a rigid shell (14) defining the storage space (22), comprising at least one upper wall (16) and a side wall (18), the opening (26) for introducing refuse (24) being provided in at least one side wall (18) of the rigid shell (14).

13. Container (10) for collecting refuse (24) according to the preceding claim, further comprising a reinforcement, preferably made of metal, forming the bottom wall (20) of the container (10).
